# EUROPEAN PATENT APPLICATION

(11) **EP 3 020 567 A1**
(43) Date of publication of application: **18.05.2016**
(21) Application number: 14822838.0
(22) Date of filing: 25.06.2014
(51) Int. Cl.: B42D 25/21, B42D 25/29, B42D 25/30, B42D 25/45, B41M 3/14

(54) **PAPER-BASED OR POLYMER-BASED MULTI-LAYER DOCUMENT AND METHOD FOR DETERMINING AUTHENTICITY THEREOF**

(30) Priority: 08.07.2013 RU 2013131036
(71) Applicant: Federalnoe Gosudarstvennoe Unitarnoe Predpriyatie "Goznak" (FGUP "Goznak"), St.Petersburg 197046 (RU)
(72) Inventor: KURYATNIKOV, Andrey Borisovich, Moscow 129128 (RU); PAVLOV, Igor Vasilievich, Moscow 115193 (RU); MOCHALOV, Alexandr Igorevich, Moscow 115162 (RU); SALUNIN, Alexey Vitalievich, Moscow 117535 (RU); IPATOVA, Tatiana Petrovna, Moscow 125057 (RU); BARANOVA, Galina Sergeevna, Moscow 115191 (RU); TORGASHOVA, Alexandra Alexandrovna, Moscow 115598 (RU); GUBAREV, Anatoliy Pavlovich, Moscow 105094 (RU)
(74) Representative: Stöckeler, Ferdinand
(86) International application number: PCT/RU2014/000454
(87) International publication number: WO 2015/005825

(57) **Abstract**

The invention relates to the field of production of materials intended for visual verification of the authenticity of protected printed products such as all kinds of valuable documents. There is provided a multilayer material on a paper or polymer substrate, which comprises layers having optically variable properties. The optically variable layers, which are indistinguishable to the naked eye and have mutually opposite directions of circular polarization, comprise two identical images of the same graphical element, the images being offset in the same plane by a given distance which allows for seeing a stereoscopic image of the graphical element with the use of glasses having polarization filters with mutually opposite directions of circular polarization. The technical result is an enhanced level of protection by means of a simple method for verifying the authenticity of a product.

## Description

### Technical Field

The invention relates to the field of production of multilayer materials having optically variable properties and, in particular, can be used for verifying the authenticity of products, for the protection of which such materials are used.

### Prior Art

Among the most effective methods of verifying the authenticity of valuable documents there are methods using visual effects that are associated with a change in the image of the document. Such visual effects include, for example, the effect of motion, the effect of changing the color, the effect of volume and other. Advantages of this approach include the ease of verifying the authenticity, high efficiency of control and high level of security attained.

The visual effects may include, in particular, effects of movement of a graphic object, effect of changing the shape and size of the object, effect of changing its color or effect of volume (stereoscopy).

Owing to these advantages, visual security features have found wide application in the field of counterfeit protection, and manufacturers of banknotes and protected printing products are constantly searching for new effective and difficult-to-reproduce security features, which exhibit pronounced visual effects.

The claimed invention relates to the manufacture of protected documents with optically variable properties, taking into account the ability of human vision to see, under certain conditions, stereoscopic images of objects.

The proposed invention is based on the use, for creating stereo images, of printed images made by a printing method with polarization inks, which are visually indistinguishable, but differ in the level of glossiness when the valuable document is observed through polarization glasses or through filters with different circular polarization for right and left eye.

The visual effect resides in that when a valuable document is observed with the naked eye only two similar images indistinguishable from each other can be seen, while at observation of the valuable document through polarization glasses or through different filters for right and left eye, each of which has a different direction of rotation of circular polarization, a stereoscopic image of the graphic element is formed, and the apparent arrangement plane of the graphic element does not coincide with the plane of the valuable document.

The invention allows obtaining a visual effect of volume or different spacing of various graphic elements of the image in relation to each other and/or the plane of the valuable document, and is based on the peculiarity of stereoscopic vision of human, which allows watching a stereoscopic (or spatial) image of objects.

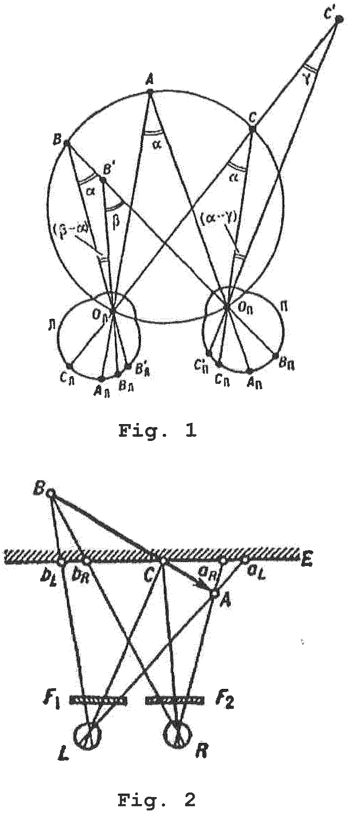

Stereoscopic vision generally refers to spatial (solid) vision that gives rise to the appearance of a three-dimensional visual impression of the observed object owing to parallaxing, viewing the object from different sides in the object space. At binocular observation in an object space of a point A (Fig. 1) its images in the right and left eye (Aᵣ and Aₗ, respectively) fall on the central fovea of the retina, while the sight axes of the eyes form an angular parallax. All points of the object space (B, C, etc), which are visible with the same angular parallax, lie on the circle passing through the fixed point A and nodal points Or and Oₗ of the eyes, and are called "horopter". Images of the object points lying on the horopter are drawn on so-called corresponding points of the retinas, which are respectively located in the right and left eye at equal distances from the central foveae.

Identical images obtained on the corresponding points always fuse into a single image. Images of points located closer to or further from the horopter are formed on non-corresponding points of the retinas, thereby signaling to the brain to perceive these points of the object as differently distant from the eyes. Under natural conditions, as the glance shifts to differently distant objects the horopter is continuously rebuilt. Mismatch (disparity) of images of the differently distant points of the object on the retinas is greater, the greater is the difference of angular parallaxes of the fixed point A and the simultaneously seen points B', C', etc.

The stereoscopic image arises in the human consciousness as a result of fusion into a single visual image of two flat images of a stereo pair, which are viewed separately with each eye. Each of the two images of the stereo pair is a central projection of the object (obtained, for example, by photography) from the right and left viewpoints spaced apart horizontally by some distance called "stereoscopic base". The image of the object obtained from the right viewpoint should be seen by the right eye, while the image obtained from the left viewpoint should be seen by the left eye. Stereoscope is the simplest device for such viewing. Since the right and left images of the stereo pair represent different perspectives of the object, they are not completely aligned when optically superposed on each other, and images of differently distant points of the object appear as offset to the right or to the left relative each other, forming a horizontal linear parallax. Magnitude of the parallax depends on the remoteness of the observed point of the image. If a point of the right image in the plane of alignment is to the right of the left image of this point, the parallax is considered to be positive and the spatial position of the fused image of the point in the stereoscopic image will be seen as disposed behind the plane of alignment; if a point of the right image is to the left of the point of the left image, the parallax is considered to be negative and the fused image of the point is seen in front of the plane of alignment; when the parallax is zero the fused image is formed in the plane of alignment.

Optical superposition of the right and left images of the stereo pair on each other is attained by selective projection or printing of these images, allowing at the same time isolation, by means of special filters, of each image from their "mix" to present it to the intended eye. Depending on image filtration method the following methods of reconstruction of a stereoscopic image can be distinguished: glasses-based methods - anaglyph, polarization, eclipse; glasses-free (raster) methods - single stereo-pair and multi-perspective.

Polarization method of reproduction of stereoscopic images (Fig. 2) uses separation of images of the stereo pair through the use, when observing the images, of polarization filters with different directions of circular polarization (in the case of oppositely directed circular polarization). In this case, one of the images of the stereo pair, e.g. the right one, is printed on the screen E with an ink having a right-handed circular polarization, and the left image, superposed on the first one, is printed with an ink having a left-handed circular polarization. Then, observing the images through polarization glasses, left eye L will see through a polarization filter Fₗ with left-hand polarization a dark silhouette of the second image, while right eye R will see through the filter with right-hand polarization a dark silhouette of the first image only. Fused image of the points fixed with right R and left L eye, respectively, will be seen at the intersection of their lines of sight at point A in front of screen E. Similarly, visual fusion of the points visible with left and right eye creates an image of point B, which lies behind the screen E. Thus, points A and B will be spatially separated. This method is easy to implement and is widely used to provide stereoscopic images in cinema.

In the context of this invention more general approaches to forming a secured stereoscopic image are to be considered, which are based on the peculiarities of human vision described above.

For example, to create a stereoscopic image not only exactly identical figures spaced at some distance in the same plane can be used, but also specially formed images, some parts of which are distorted according to the laws of perspective for obtaining three-dimensional stereoscopic images.

This approach allows creating security elements that not only have an apparent mismatch with the plane of a valuable document, but are spatial per se, contain projecting portions, convexes and concaves.

Technical solutions concerning the use of stereographic images for protection of printed products against counterfeit are known in the art.

For example, it is known to use stereoscopic images seen with the naked eye, which are formed of patterns of separate images creating a stereoscopic effect when applying a prismatic raster, and to use a stereoscopic image obtained by anaglyph method, wherein a portion of the image is printed with a colored ink, and a portion of the image is formed by a watermark, and the observation is performed in anaglyph glasses (GB 1286309, 23.08.1972).

However, these solutions are obsolete and are easy to counterfeit. Furthermore, the above solutions exclude the use of latent images.

Known is the use of a moire magnifying structure as a security element. Such solutions are based on obtaining stereoscopic or three-dimensional images using lens rasters (RU 2466030, 10.11.2012).

WO 2009047579, 16.04.2009, as well as WO 2008128714, 30.10.2008, describes materials containing polarization marks. However, the known solutions do not use images with oppositely directed circular polarization, which initially, when observed with the naked eye, are indistinguishable and become visible separately only when successively observed through filters with different circular polarization. Furthermore, there is no possibility of identification of valuable documents based on the presence of stereoscopic images, the apparent plane of which does not coincide with the plane of the valuable document.

It is known to use a contour image on a material to produce a stereoscopic effect (WO 2006066732, 29.06.2006). This solution involves the use, for verifying the authenticity of a protected document, of a special image that has the property of three-dimensionality and/or change of the observed perspective. However, at present the technologies for producing holograms of various types are widely accessible, i.e. the prior solution does not possess the required protective function.

A counterfeit-protected valuable document is known, which comprises a material in the form of initially hidden optically variable layers having different polarization and it is intended for verifying the authenticity with the use of a polarizing filter (RU 2241603, 10.12.2004).

However, said solution does not provide the possibility of verifying the authenticity of the document using a visual effect, which is based on the peculiarity of stereoscopic vision and consists in an apparent different remoteness of the image of the security marking and the plane of surface of the valuable document.

A security element is known, which comprises two light-polarizing layers with circular polarization, and a semitransparent filter layer, on which the light-polarizing layers are arranged one above the other. The light-polarizing layers comprise cholesteric liquid crystal materials (RU 2364517, 20.08.2009).

The known solution does not provide the possibility of visual verification of the authenticity of the protected product.

Known is a document with an indicator device. The indicator device comprises a flexible indicator layer for reproducing at least one first and/or one second image, and an optical layer disposed on the indicator layer. The optical layer forms an auto-stereoscopic three-dimensional image consisting of a first and second image. The indicator layer is made based on light-emitting diodes (RU 2431877, 20.10.2011).

The indicator device is quite complex.

A system for protecting a document from a number of similar protected documents is known, the system comprising an authentication mark and an authenticity verification element. The authentication mark is specific to this protected document, and the authenticity verification element is designed to verify the authenticity of authentication marks of other documents from the number of similar protected documents. Nondestructive verification of the authentication mark of the protection system is executable only by means of pre-specified effect from combination with the authenticity verification element of the protection system arranged on another protected document of the same type. This protection system provides that two authenticity verification elements may be disposed at a distance corresponding to the distance between pupils to form a kind of stereoscopic polarization glasses if they are made of two polarizing films oriented perpendicular to each other on a window portion of the protected object. In this case the authentication mark disposed between two authenticity verification elements comprises polarizing fragments of images, agreed with the polarization angle of the films, that can be applied by printing, for example, using an ink containing liquid crystal pigments (RU 2401209, 10.10.2010).

However, this solution is used to protect a document from a number of similar protected documents.

### Summary of the Invention

The object of the present group of inventions is to provide a material exhibiting an enhanced level of counterfeit protection of a valuable document with the use of a stereoscopic effect.

The object is attained in a multilayer document comprising a paper or polymer substrate with two optically variable layers applied upon the substrate, each of the layers containing an identical image of the same element, the images are offset relative to each other in the same plane and are indistinguishable from each other when observed with the naked eye; the optically variable layers have the property of circular polarization of incident and/or reflected radiation; said layers have mutually opposite directions of the circular polarization, and images in the optically variable layers are offset relative to each other at a distance providing the appearance of a stereoscopic image of the element when observed through glasses with polarization filters having mutually opposite directions of circular polarization.

Preferably, images in the two optically variable layers are offset relative to each other in the same plane at a distance of 0.1 to 10 mm.

According to the invention the optically variable layers may have color variable properties that become apparent when observed at different angles.

The optically variable layers preferably comprise particles with optically variable properties having a size, preferably, from 1 µm to 400 µm, and a transparent binder, and are applied onto the substrate by a printing method, preferably, by the screen printing method.

The used substrate may be provided with a color contrasting cover applied thereon by a printing method.

According to the invention, images in the optically variable layers can be made in the form of geometric or other figures, guilloche elements, graphical and alphanumeric symbols, or a combination thereof.

The object is also attained by the use of the material described above for formation of a security element in products selected from: banknotes, security papers, payment or identity documents, excise or post stamps, plastic cards.

Furthermore, the object is attained by a method of verifying the authenticity of a product manufactured using the above described material. The method comprises first observing with the naked eye a product comprising on its surface a security element based on the claimed multilayer material; establishing that images formed in each of the optically variable layers are indistinguishable from each other to the naked eye, and then observing the same product through glasses with polarization filters that have mutually opposite directions of circular polarization, and upon detecting a stereoscopic image of the security element concluding on its authenticity.

As compared to conventional technical solutions the present group of inventions involves the use of optically variable layers with mutually opposite circular light polarization, thereby allowing visual observation of a stereoscopic image through polarization filters with different circular polarization of indistinguishable latent images, and observation in glasses with filters having a left and right circular polarization of stereoscopic images lying in a plane not coinciding with the plane of the valuable document.

Counterfeiting of the multilayer material according to the present invention is problematic because it presents the following difficulties:
1. The need to select materials with specified visual optically variable properties. Such materials are not generally available.
2. Furthermore, it is necessary to select materials having similar visual optically variable properties (indistinguishable from each other), but having a mutually opposite circular polarization of light.
3. The need to develop a method of applying optically variable layers on the product, for example, a valuable document. The most common technologies, such as inkjet printing and rainbow hologram, are unsuitable in this case.
4. The need to counterfeit (reproduce) the design of latent elements to achieve a stereoscopic visual effect.

The existence of such constraints leads to the conclusion that products manufactured with the use of marking made with the inventive material have a sufficient level of counterfeit protection. Furthermore, the method of verifying the authenticity of products is quite simple and involve the use of simple means, particularly, glasses with polarization filters having mutually opposite directions of circular polarization.

### Brief Description of the Drawings

Fig. 1 shows schematically binocular observation in an object space of a point A, where its images in the right and left eye (Aᵣ and Aₗ) fall in the central foveae of the retina, and the sight axes of the eyes form an angular parallax. All points of the object space (B, C, etc) that are visible with the same angular parallax lie on the circle passing through the set point A and nodal eye points O_{R} and O_{L}.
Fig. 2 is a schematic diagram of a polarization method of reproduction of stereoscopic images, which uses separation of images of a stereo pair through the employment in observation of the images of polarization filters with different directions of circular polarization. One of the images of the stereo pair, for example, the right one, is printed on screen E with an ink having a right-handed circular polarization, while the left image, superposed on the first one, is printed with an ink having a left-handed circular polarization. Left eye L sees through the left-handed polarization filter F_{L} a dark silhouette of the second image, and right eye R sees through the right-handed polarization filter a dark silhouette of the first image only. Fused image of the points seen with right R and left L eye, respectively, will be visible at the intersection of their lines of sight at point A in front of the screen E. Similarly, visual fusion of the points seen with the left and right eye creates an image of point B, which lies behind the screen E. Thus, points A and B are spatially separated.

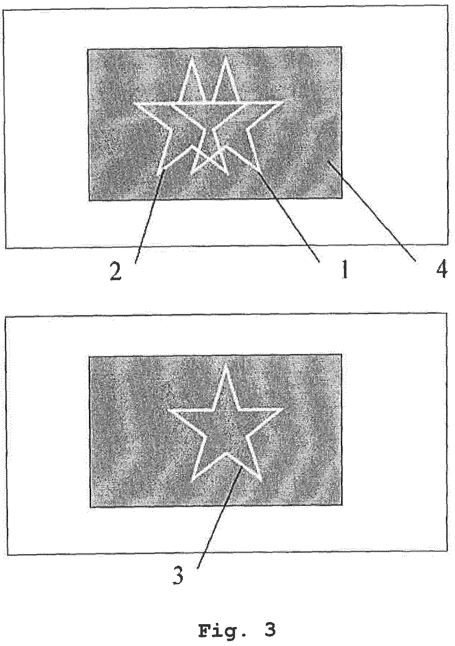

Fig. 3 shows schematically a valuable document in the form of a banknote comprising a substrate in the form of a square of brown color, made by an offset printing method (reference numeral 4) and a security marking applied thereon and consisting of two layers indistinguishable to the naked eye, made by a color variable screen printing ink, one of the layers having a left-hand circular polarization (reference numeral 1) and the other one having a right-handed circular polarization (reference numeral 2). The layers are made in the form of the same figure representing a five-pointed star 20x20 mm in the size with the line thickness of 150 µm; the figures are spaced apart in one direction that is parallel to the long side of the banknote at a distance of 2 mm. Figures of the layers have a pattern (reference numerals 1 and 2) formed so that a portion of the graphic element of each figure is similar to the identical portion of the figure on the other layer, but they are offset relative to each other in mutually opposite directions.

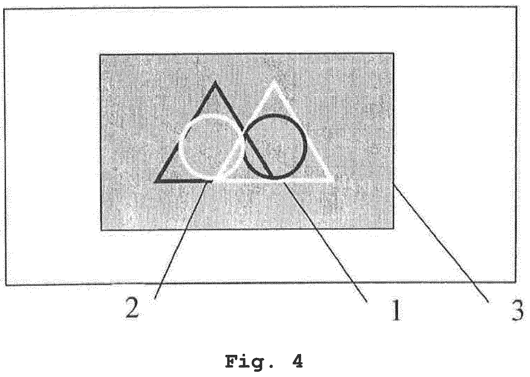

Fig. 4 is a schematic diagram of a valuable document in the form of an excise stamp comprising a contrasting substrate made by an offset printing method (reference numeral 3) and a security marking applied thereon and consisting of two layers indistinguishable to the naked eye, which are made by a color variable screen printing ink, one of the layers having a left-handed circular polarization (reference numeral 1) and the other one having a right-handed circular polarization (reference numeral 2).

### Best Embodiment of the Invention

Implementation of the invention is illustrated by images presented in Examples 1 and 2.

The examples given below are provided to illustrate the ability of producing and using the material defined by the set of features according to the invention, but they do not limit its scope.

### Example 1

A valuable document, which is a banknote, comprises a substrate in the shape of a square of brown color, made by an offset printing method (reference numeral 4 in Fig. 3) and a security marking applied upon the substrate and consisting of two layers indistinguishable to the naked eye, as shown in Fig. 3:
1. Layer made by a color variable screen printing ink, having a left-handed circular polarization (reference numeral 1 in Fig. 3);
2. Layer made by a color variable screen printing ink, having a right-handed circular polarization (reference numeral 2 in Fig. 3).

### Components of screen printing ink 1:

UV curable binder 672020, product of company GSI - 80%;
Color variable LCP pigment with left-handed polarization - 18%;
Thinner 672002, product of company GSI - 2%;
TOTAL: 100%.

### Components of screen printing ink 2:

UV curable binder 672020, product of company GSI - 80%;
Color variable LCP pigment with right-handed polarization - 18%;
Thinner 672002, product of company GSI - 2%
TOTAL: 100%.

Particles (LCP) with optically variable properties have the average size of 15 µm with the dispersion of particle size from 5 to 25 µm.

When the document is observed at the right angle, these layers appear transparent (colorless), while at observation at an acute angle they acquire pearly greenish color.

Each of the layers is made in the form of an identical figure representing a five-pointed star 20x20 mm in size with the line thickness of 150 µm, the figures being spaced apart in one direction parallel to the long side of the banknote by a distance of 2 mm (Fig. 3).

The banknote is observed through glasses provided with filters having right and left circular polarization, and it is determined that images of the five-pointed star figure of the first layer and the second layer appear as a single common stereoscopic image, while the apparent plane of the image (the star) does not coincide with the plane of the valuable document by about 1 cm. Depending on the orientation of the banknote, the star image may appear as lying either behind or in front of the plane of the banknote base.

The presence of this combination of visual effects defines the authenticity of the valuable document.

### Example 2

A valuable document in the form of an excise stamp comprises a contrasting substrate made by an offset printing method (Fig. 4, reference numeral 4) and a security marking applied upon the substrate and consisting of two layers indistinguishable to the naked eye:
1. Layer made by a color variable screen printing ink, having left-handed circular polarization (reference numeral 1 in Fig. 4);
2. Layer made by a color variable screen printing ink, having right-handed circular polarization (reference numeral 2 in Fig. 4).

### Components of screen printing ink 1:

UV curable binder 672020, product of company GSI - 85%;
Color variable LCP pigment with left-handed polarization - 13%;
Thinner 672002, product of company GSI - 2%;
TOTAL: 100%.

### Components of screen printing ink 2:

UV curable binder 672020, product of company GSI - 85%;
Color variable LCP pigment with right-handed polarization - 13%;
Thinner 672002, product of company GSI - 2%
TOTAL: 100%.

Particles (LCP) with optically variable properties have the average size of 25 µm with the dispersion of particle size from 5 to 40 µm.

When the document is observed at the right angle, the layers appear transparent (colorless), while at observation at an acute angle they acquire pearly reddish color.

Figures of the layers have a pattern (reference numerals 1 and 2 in Fig. 3), formed such that a portion of the graphic element of each figure is similar to the identical portion of the figure on the other layer, but they are offset relative to each other in mutually opposite directions.

The valuable document is further observed through glasses provided with filters having right and left circular polarizations, and it is determined that two images of layer No. 1 and layer No. 2 look like two different stereoscopic images, and the apparent planes of these images do not coincide with the plane of the valuable document. The presence of this visual effect defines the authenticity of the valuable document.

### Example 3

A valuable document in the form of a banknote comprises a contrasting substrate made by an offset printing method, and a security marking applied upon the substrate and consisting of two layers indistinguishable to the naked eye:
1. Layer made by a color variable screen printing ink, having left-handed circular polarization;
2. Layer made by a color variable screen printing ink, having right-handed circular polarization.

### Components of screen printing ink 1:

UV curable binder 672020, product of company GSI - 83%;
Color variable LCP pigment with left-handed polarization - 15%;
Thinner 672002, product of company GSI - 2%;
TOTAL: 100%.

### Components of screen printing ink 2:

UV curable binder 672020, product of company GSI - 83%;
Color variable LCP pigment with right-handed polarization 15%;
Thinner 672002, product of company GSI - 2%
TOTAL: 100%.

Particles (LCP) with optically variable properties have the average size of 25 µm with the dispersion of particles size from 5 to 40 µm.

When the document is observed at the right angle, the layers appear transparent (colorless), while at observation at an acute angle they acquire a golden color.

Each of the layers is made in the form of outwardly similar figures representing a latticed image of 20x20 mm in size with the line thickness of 150 µm, where the lines constituting the figures are spaced apart in one direction parallel to the long side of the banknote at different distances varying from 0.5 to 2 mm so that they form a spatial stereoscopic image with account of the perspective from side of the observer observing the banknote through glasses that are provided with filters having right and left circular polarization.

In this case two images of layer No. 1 and No. 2 appear as a single three-dimensional stereoscopic image, the apparent plane of which does not coincide with the plane of the valuable document, and separate portions of this image seem to be differently remote from the observer, convex or concave.

The presence of this visual effect defines the authenticity of the valuable document.

### Industrial Applicability

The invention is applicable in the field of manufacture of multilayer materials having optically variable properties and, in particular, can be used for verifying the authenticity of products, for protection of which such materials are used.

## Claims

1. A multilayer document comprising a paper or polymer substrate with two optically variable layers applied upon the substrate, each of the layers containing an identical image of the same element, the images are offset relative to each other in the same plane and are indistinguishable from each other when observed with the naked eye; wherein the optically variable layers have the property of circular polarization of incident and/or reflected and/or transmitted radiation; said layers have mutually opposite directions of circular polarization, and images in the optically variable layers are offset relative to each other at a distance providing the appearance of a stereoscopic image of the element when observed through glasses with polarization filters having mutually opposite directions of circular polarization.

2. The document according to claim 1, **characterized in that** images in the two optically variable layers are offset relative to each other in the same plane at the distance of 0.1 to 10 mm.

3. The document according to claim 1, **characterized in that** the optically variable layers have color variable properties that become apparent when observed at different angles.

4. The document according to claim 1, **characterized in that** the optically variable layers comprise particles with optically variable properties, having a size, preferably, from 1 µm to 400 µm, and a transparent binder, and are applied onto the substrate by a printing method, preferably, by a screen printing method.

5. The document according to claim 1, **characterized in that** the substrate comprises a color contrasting cover applied thereon by a printing method.

6. The document according to claim 1, **characterized in that** the images in the optically variable layers are made in the form of geometric or other figures, guilloche elements, graphical and alphanumeric symbols, or a combination thereof.

7. The document as set forth in any one of claims 1 to 6, representing a product selected from: banknote, security paper, payment or identity document, excise or post stamp, plastic card.

8. A method of verifying the authenticity of a document according to claims 1 to 6, comprising: first observing with the naked eye a product comprising on its surface a security element based on the multilayer material as set forth in claims 1 to 7; establishing that images formed in each of the optically variable layers are indistinguishable from each other to the naked eye, and then observing the same product through glasses with polarization filters that have mutually opposite directions of circular polarization, and upon detecting a stereoscopic image of the security element concluding on its authenticity.

9. The method according to claim 8, **characterized in that** the apparent plane of the stereoscopic image does not coincide with the plane of the substrate of the multilayer document.
